Europäisches Patentamt

European Patent Office

Office européen des brevets

(11) Publication number: **0 187 440**
**B1**

(12) **EUROPEAN PATENT SPECIFICATION**

(45) Date of publication of patent specification: **28.03.90**

(51) Int. Cl.⁵: **G 11 B 5/82**

(21) Application number: **85306416.0**

(22) Date of filing: **10.09.85**

(54) Method for manufacturing a magnetic recording medium.

(30) Priority: **28.12.84 JP 276148/84**

(43) Date of publication of application:
**16.07.86 Bulletin 86/29**

(45) Publication of the grant of the patent:
**28.03.90 Bulletin 90/13**

(84) Designated Contracting States:
**DE FR GB NL**

(56) References cited:
**EP-A-0 110 663**
**DE-A-3 319 794**
**DE-B-1 291 531**
**GB-A-2 081 959**
**US-A-4 327 139**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Saitoh, Mitsuyoshi c/o Patent Division**
**Kabushiki Kaisha Toshiba 1-1 Shibaura 1-chome**
**Minato-ku Tokyo 105 (JP)**
Inventor: **Sekine, Kunio c/o Patent Division**
**Kabushiki Kaisha Toshiba 1-1 Shibaura 1-chome**
**Minato-ku Tokyo 105 (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

## Description

The present invention relates to a method for manufacturing a magnetic recording medium for magnetic recording/reproduction which proper surface lubrication of a recording medium sheet is realized.

Due to recent developments in data processing technique, the demand for a memory device with a large data storage capacity has greatly increased. Moreover, demand has arisen for a large-capacity magnetic recording medium such as a hard disk or a floppy disk.

In one method proposed to realize a large-capacity magnetic recording medium, the magnetic recording layer of a magnetic recording medium sheet comprises a thin magnetic metal film suitable for high density recording, i.e., a thin film made of metals such as Co—Cr.

Some important problems, however, must be resolved in order to realize a magnetic recording medium using a thin magnetic metal film. One such problem involves the performance of surface lubrication, as surface lubrication is an important factor in improving reliability and durability of the recording medium.

In a hard disk device, a recording head and a recording medium sheet, i.e., a magnetic disk, repeatedly make and break contact with each other in a stop/start mode. In a floppy disk device, during a read/write interval involving a magnetic disk as a recording medium sheet, a magnetic head is brought into contact with the magnetic disk. For this reason, if the surface of the magnetic disk is not appropriately lubricated, scratching occurs on the surface of the disk and the disk becomes worn, thus shortening the life of the disk and degrading performance.

Needless to say, the surface lubrication process is important in another type of magnetic recording medium which uses a particulate medium as a recording medium material, or, for that matter, which uses a recording medium sheet of other than a disk shape. That is, unless the surface of a recording medium sheet is appropriately lubricated, regardless of its type, its life will be shortened, and its performance lowered.

As one surface lubricating method, a spin coating method is known. In the spin coating method, the recording medium sheet is rotated at high speed, and lubricating oil is dripped at a central surface portion of the sheet as it is being rotated. Thus, lubricating oil is dispersed by centrifugal force, and the surface of the recording medium sheet is coated, at least partially, with the lubricating oil.

As another surface lubricating method, an immersion coating method is known. In the immersion coating method, the recording medium sheet is dipped directly into lubricating oil. Thus, the lubricating oil is attached to and coated on the surface of the sheet.

However, with both methods, the lubricating oil cannot be uniformly coated on the recording medium sheet.

For this reason, it is difficult to maintain a constant gap in the order of submicrons between the recording medium sheet and the magnetic head, resulting in an unstable recording/reproduction level. Furthermore, in the worst case, the recording medium sheet can become attached to the magnetic head due to nonuniform coating with lubricating oil. Of course, nonuniform coating of the lubricating oil may also damage and cause local wear of the recording medium sheet.

Such phenomena cause damage to the magnetic head. When the head is damaged, the recording medium sheet incurs further damage, resulting in unstable recording/reproduction operation.

EP—A—0110663 discloses a method for manufacturing a magnetic recording medium comprising a magnetic recording medium sheet formed of a sheet-like magnetic recording medium material having at least a magnetic recording layer, and a pair of nonwoven fabric layers arranged so as to sandwich said magnetic recording medium sheet therebetween and to face the two surfaces thereof for protecting said magnetic recording medium sheet.

US—A—4327139 discloses perfluoropolyether as a lubricating oil for a magnetic disc.

It is an object of the present invention to provide a method for manufacturing a magnetic recording medium wherein a uniform and proper lubricating oil film can be applied to a magnetic recording medium sheet such that excellent lubrication between the magnetic recording medium sheet and a magnetic head is obtained to realize a satisfactory recording/reproduction operation.

According to the present invention, this object is achieved by a first step of impregnating at least a portion of at least one of said nonwoven fabric layers, arranged to face at least one surface of said magnetic recording medium, with a fluorine-based lubricating oil solution diluted with a fluorine-based solvent, the concentration of said lubricating oil solution falling within the range between 0.5% and 0.1% by volume;

a second step of drying said nonwoven fabric layer which is impregnated with the lubricating oil solution so as to remove at least a portion of the solvent of the lubricating oil solution; and

a third step of providing said nonwoven fabric layer, subjected to the second step, on said magnetic recording medium sheet.

In the conventional floppy disk, in order to preclude wear, nonwoven fabric is arranged on two surfaces of the magnetic recording medium sheet. Preferably the same nonwoven fabric, a conventional nonwoven fabric, provided on the two surfaces of the magnetic recording medium sheet, is pre-impregnated with lubricating oil. Since the magnetic recording medium sheet is in continuous contact with the nonwoven, oil impregnated fabric while being driven, a thin uniform lubricating oil film is formed between the magnetic head and the recording medium sheet, the film thickness of the lubricating oil being optimally controlled. In this case, a very thin oil film can be formed and maintained over a long period of time.

Therefore, according to the present invention, a uniform and proper lubricating oil film can be formed on the magnetic recording medium sheet such that excellent lubrication between the magnetic recording medium sheet and the magnetic head is obtained to realize a satisfactory recording/reproduction operation.

This invention can be more fully understood from the following detailed description when taken in conjunction with the accompanying drawings, in which:

Fig. 1 is an exploded perspective view showing an arrangement of a magnetic recording medium manufactured by a method according to the present invention;

Fig. 2 is a flow chart showing the main manufacturing steps of the method; and

Fig. 3 is a graph showing the relationship between a concentration of a lubricating oil solution for impregnating a nonwoven fabric, and an average friction acting on the recording medium sheet manufactured according to the present invention.

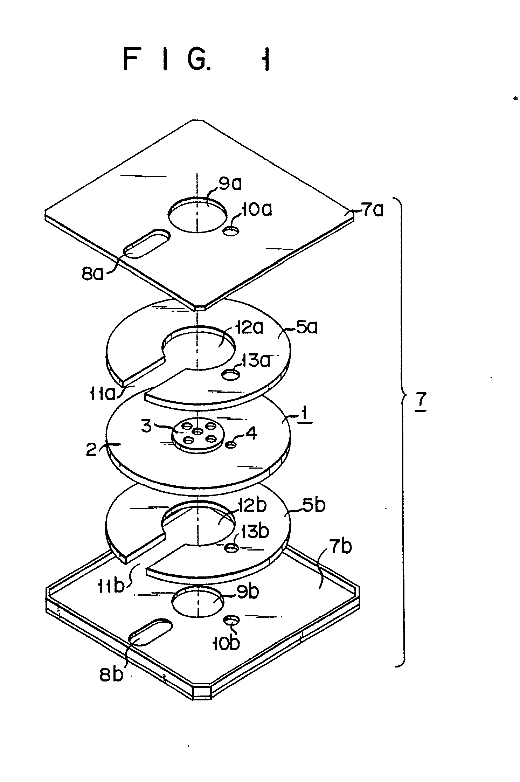

In Fig. 1, the magnetic recording medium is a floppy disk.

A magnetic recording medium disk is arranged consisting of a double-sided magnetic recording medium sheet. The disk 1 is constituted by a disk-shaped sheet 2 in which thin Co-Cr films are formed, as magnetic layers, by sputtering, on two surfaces of a disk-like base made of a polymeric material film such as polyimide or polyester, and a hub 3 fixed at a central portion of the sheet 2 with a central hole being formed therein. (An index hole 4 is also formed in the sheet 2.)

The disk 1 is housed in a case 7 in the state wherein two surfaces of the disk 1 are covered with nonwoven fabric layers 5a and 5b. The case 7 comprises two portions 7a and 7b. The nonwoven fabric layers 5a and 5b are arranged along the inner surface sides of the portions 7a and 7b of the case 7, respectively, and the disk 1 is housed in the case 7 so as to be sandwiched between the fabric layers 5a and 5b. Three openings, i.e., a head window 8a, a central window 9a and an index window 10a are formed in the first portion 7a of the case 7. Similarly, three openings, i.e, a head window 8b, a central window 9b and an index window 10b are formed in the second portion 7b of the case 7. The head windows 8a and 8b are formed so that a magnetic head (not shown) can be brought into contact with the disk 1. The central windows 9a and 9b are provided for inserting a member (not shown) for clamping the disk 1 therethrough. The index windows 10a and 10b are provided for externally detecting the index hole 4 formed in the disk 1. The nonwoven fabric layers 5a and 5b are made of, e.g., "Kendall Diskette Liner 149—303" (trade name: available from Kendall Company), and are larger than the disk 1. Notches 11a and 11b are formed in the nonwoven fabric layers 5a abd 5b in portions corresponding to the head windows 8a and 8b, and holes 12a and 12b are formed therein at positions corresponding to the central windows 9a and 9b. In addition, holes 13a and 13b are formed therein at positions corresponding to the index windows 10a and 10b.

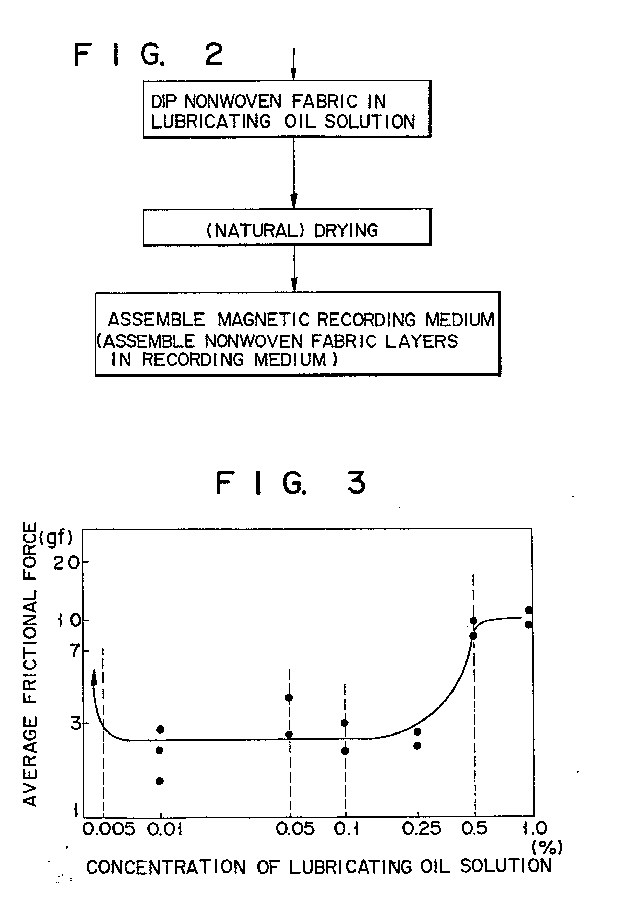

Fig. 2 schematically shows steps for arranging the nonwoven fabric layers 5a and 5b in the magnetic recording medium.

A fluorine-based lubricating oil (e.g., "Perfluoropolyether" available from Montefluos) is dissolved in a fluorine solvent (in this case, the solvent is volatile, e.g., "Fluorinert FC-77", trade name: available from 3M) and diluted to a concentration of about 0.005% to 0.5%. A nonwoven fabric, before being layer formed, is dipped in the lubricating oil solution for about 2 minutes such that the nonwoven fabric is sufficiently impregnated with the solution. Thereafter, the nonwoven fabric is raised from the lubricating oil solution and is dried naturally for about 1 hour so as to remove the excess solvent. In this manner, the nonwoven fabric is uniformly impregnated with the lubricating oil, and almost all of the excess solvent removed. The nonwoven fabric is formed into nonwoven fabric layers 5a and 5b, having the shapes shown in Fig. 1, and the layers 5a and 5b are then arranged in the magnetic recording medium.

The recording medium is assembled as follows.

The nonwoven fabric layers 5a and 5b, which are impregnated with the lubricating oil and which are formed into a predetermined shape, are adhered to the inner surfaces of the portions 7a and 7b of the case 7. Specifically, portions of the nonwoven fabric layers 5a and 5b which are not in direct contact with the disk 1, e.g., edge portions thereof, are adhered to the case portions 7a and 7b, and the peripheral edges of the case portions 7a and 7b are adhered to each other so as to sandwich the disk 1 therebetween, thus forming the case 7.

Before being housed in the case 7, however, the disk-like sheet 2 must be formed, and the hub 3 mounted. The sheet 2 is obtained by forming a recording medium sheet into a disk shape, the recording medium sheet comprising thin Co-Cr films as magnetic layers on two surfaces of a base comprised of a polymeric material. When, the case 7 is formed, as above, the disk 1 is housed therein such that, at the same time, the nonwoven, oil impregnated fabric layers 5a and 5b are arranged on the two surfaces of the disk 1.

According to this embodiment, in the magnetic recording medium arranged and manufactured as described above, the recording medium disk 1 which is clamped at the hub 3 portion is rotated in use. The case 7 and the nonwoven fabric layers 5a and 5b arranged therein are not rotated. For this reason, the disk 1 is moved relative to the nonwoven fabric layers 5a and 5b in the state wherein the two surfaces of the disk 1 are in contact with the nonwoven fabric layers 5a and 5b. The lubricating oil impregnated in the nonwoven fabric layers 5a and 5b is thus coated on the two surfaces of the disk 1 to form a thin oil film. Since the disk 1 is rotated while continuously contacting the nonwoven fabric layers 5a and 5b, the lubricating oil film coated on each surface of the disk 1 is sufficiently thin and uniform, providing good disk 1 lubrication. Furthermore, a gap between the disk 1 and the magnetic head becomes constant, thus stabilizing the reproduction output. Since the disk is coated with a very thin film of lubricating oil, unwanted attachment of the disk 1 to the head can be effectively prevented.

Fig. 3 shows measurements of experimental results of a change in the average friction acting on the disk 1 when the concentration of the lubricating oil solution for dipping the nonwoven fabric layers 5a and 5b was varied. The experimental data was obtained in such a manner that friction of the magnetic head was detected by a load sensor when the magnetic head, supported by an air bearing, was brought into contact with the lower surface of the rotating disk 1.

As can be seen from the experimental results, when the concentration of the lubricating oil solution falls within the range between 0.005% to 0.5%, the average friction is greatly decreased. That is, this embodiment is effective when the concentration of the lubricating oil solution falls within the range between 0.005% and 0.5%. Furthermore, when the concentration of the lubricating oil solution is too low, an absolute amount of the oil impregnated in the nonwoven fabric is decreased. For this reason, in order to stably supply the lubricating oil for a long period of time, it is important that concentration of the lubricating oil solution not be too low. Therefore, the optimum range of concentration of the lubricating oil solution is between 0.05% and 0.1%, within which the average friction is smallest and the concentration not too low.

Note that the present invention is not limited to the magnetic recording medium using the magnetic recording medium material of thin magnetic metal film described above. The present invention can also be applied to a magnetic recording medium using a magnetic recording medium material of a particulate type.

In general, since protective nonwoven fabric is usually arranged as in the above embodiment, on two surfaces of a recording medium disk in a floppy disk medium, with only a few modifications and additional steps to conventional arrangements and manufacturing methods, the nonwoven fabric can be impregnated with lubricating oil. Though, in contrast, no nonwoven fabric is generally provided in a hard disk medium, with only a few modifications, nonwoven fabric preimpregnated with lubricating oil can be newly provided on two surfaces of a recording medium disk.

When the present invention is applied to a single-sided recording medium, only one of the two nonwoven fabric layers used for protecting the two surfaces, i.e., the one corresponding to the recording surface, need be impregnated with the lubricating oil.

Alternative methods for impregnating the nonwoven fabric with the lubricating oil solution include spraying the lubricating oil solution on to the nonwoven fabric, instead of dipping it in the lubricating oil solution, or coating the lubricating oil solution on the nonwoven fabric.

As well, in the step of drying in order to remove at least a portion of the solvent of the lubricating oil solution from the nonwoven fabric, a positive drying means such as a heating means or blowing means can be used in place of natural drying.

**Claims**

1. A method of manufacturing a magnetic recording medium comprising a magnetic recording medium sheet (2) formed of a sheet-like magnetic recording medium material having at least a magnetic recording layer, and a pair of nonwoven fabric layers (5a, 5b) arranged so as to sandwich said magnetic recording medium sheet (2) therebetween and to face the two surfaces thereof for protecting said magnetic recording medium sheet (2), characterized by:

a first step of impregnating at least a portion of at least one of said nonwoven fabric layers (5a, 5b) arranged to face a surface of said magnetic recording medium, with a fluorine-based lubricating oil solution diluted with a fluorine-based solvent, the concentration of said lubricating oil solution falling within the range between 0.05% and 0.1% by volume;

a second step of drying said nonwoven fabric layer (5a or 5b) which is impregnated with the lubricating oil solution so as to remove at least a portion of the solvent of the lubricating oil solution; and

a third step of providing said nonwoven fabric layer (5a or 5b), subjected to the second step, on said magnetic recording medium sheet (2).

2. A method according to claim 1, characterized in that, in the first step, said nonwoven fabric layer (5a or 5b) is dipped in the lubricating oil solution so as to impregnate said nonwoven fabric layer with the lubricating oil solution.

3. A method according to claim 1, characterized in that, in the first step, the lubricating oil solution is sprayed on said nonwoven fabric layer (5a or 5b) so as to impregnate said nonwoven fabric layer with the lubricating oil solution.

4. A method according to claim 1, characterized in that, in the first step, the lubricating oil solution is coated on said nonwoven fabric layer (5a or 5b) so as to impregnate said nonwoven fabric layer with the lubricating oil solution.

5. A method according to claim 1, characterized in that, in the second step, said nonwoven fabric layer (5a or 5b) which is impregnated with the lubrication oil solution is dried by drying means.

6. A method according to claim 1, characterized in that, in the second step, said nonwoven fabric layer (5a or 5b) which is impregnated with the lubricating oil solution is dried naturally.

7. A method according to claim 1, characterized in that said magnetic recording medium further comprises a case (7) for housing said magnetic recording medium sheet and said nonwoven fabric layers (5a, 5b), and in that, in the third step, said nonwoven fabric layers (5a, 5b), subjected to the second step are adhered to the inner surfaces of said case (7) so as to house said magnetic recording medium sheet in said case.

**Patentansprüche**

1. Verfahren zur Herstellung eines magnetischen Aufzeichnungsmaterials mit einem lagenartigen magnetischen Aufzeichnungsmedium (2) aus einem lagenartigen magnetischen Aufzeichnungsmediummaterial mit mindestens einer magnetischen Aufzeichnungsschicht und einem Paar Faservliesschichten (5a, 5b), die derart angeordnet sind, daß sich das lagenartige magnetische Aufzeichnungsmedium (2) zwischen ihnen befindet und daß sie dessen beiden Oberflächen zugewandt sind, um das lagenartige magnetische Aufzeichnungsmedium (2) zu schützen, gekennzeichnet durch:

eine erste Stufe, in der mindestens ein Teil mindestens einer der Faservliesschichten (5a, 5b), die derart angeordnet ist, daß sie einer Oberfläche des magnetischen Aufzeichnungsmediums zugewandt ist, mit einer Schmieröllösung auf Fluorbasis, die mit einem Lösungsmittel auf Fluorbasis verdünnt ist, imprägniert wird, wobei die Konzentration der Schmieröllösung im Bereich zwischen 0,05 und 0,1 Vol.-% liegt;

eine zweite Stufe, in der die mit der Schmieröllösung imprägnierte Faservliesschicht (5a oder 5b) getrocknet wird, um zumindest einen Teil des Lösungsmittels der Schmieröllösung zu entfernen, und

eine dritte Stufe, in der die Faservliesschicht (5a oder 5b) aus der zweiten Stufe an dem langenartigen magnetischen Aufzeichnungsmedium (2) angebracht wird.

2. Verfahren nach Anspruch 1, dadurch gekennzeichnet, daß in der ersten Stufe die Faservliesschicht (5a oder 5b) zu ihrer Imprägnierung mit der Schmieröllösung in die Schmieröllösung getaucht wird.

3. Verfahren nach Anspruch 1, dadurch gekennzeichnet, daß in der ersten Stufe die Schmieröllösung auf die Faservliesschicht (5a oder 5b) aufgesprüht wird, um die Faservliesschicht mit der Schmieröllösung zu imprägnieren.

4. Verfahren nach Anspruch 1, dadurch gekennzeichnet, daß in der ersten Stufe die Schmieröllösung auf die Faservliesschicht (5a oder 5b) aufgetragen wird, um die Faservliesschicht mit der Schmieröllösung zu imprägnieren.

5. Verfahren nach Anspruch 1, dadurch gekennzeichnet, daß in der zweiten Stufe die mit der Schmieröllösung imprägnierte Faservliesschicht (5a oder 5b) mittels einer Trocknungsvorrichtung getrocknet wird.

6. Verfahren nach Anspruch 1, dadurch gekennzeichnet, daß in der zweiten Stufe die mit der Schmieröllösung imprägnierte Faservliesschicht (5a oder 5b) auf natürliche Weise getrocknet wird.

7. Verfahren nach Anspruch 1, dadurch gekennzeichnet, daß das magnetische Aufzeichnungsmaterial zusätzlich ein Gehäuse (7) zur Aufnahme des lagenartigen magnetischen Aufzeichnungsmediums und der Faservliesschichten (5a, 5b) aufweist, und daß in der dritten Stufe die Faservliesschichten (5a, 5b) aus der zweiten Stufe derart an den Innenwänden des Gehäuses (7) befestigt werden, daß sie das lagenartige magnetische Aufzeichnungsmedium in dem Gehäuse einschließen.

**Revendications**

1. Un procédé de fabrication d'un milieu d'enregistrement magnétique comprenant une feuille de milieu d'enregistrement magnétique (2) formée d'un matériau de milieu d'enregistrement magnétique en forme de feuille ayant au moins une couche d'enregistrement magnétique, et une paire de couches de tissu non tissé (5a, 5b) agencées pour prendre en sandwich ladite feuille de milieu d'enregistrement magnétique (2) entre elles et à faire face aux deux surfaces de ladite feuille pour protéger ladite feuille de milieu d'enregistrement magnétique (2), caractérisé par:

une première étape d'imprégnation d'au moins une portion d'au moins une desdites couches de tissu non tissé (5a, 5b) agencée pour faire face à une surface dudit milieu d'enregistrement magnétique, par une solution d'huile lubrifiante à base de fluor diluée par un solvant à base de fluor, la concentration de ladite solution d'huile lubrifiante tombant dans l'intervalle compris entre 0,05% et 0,1% en volume;

une seconde étape de séchage de ladite couche de tissu non tissé (5a ou 5b) qui est imprégnée de solution d'huile lubrifiante afin d'éliminer au moins une portion du solvant de la solution d'huile lubrifiante; et

une troisième étape pour appliquer ladite couche de tissu non tissé (5a ou 5b), formée dans la seconde étape, sur ladite feuille de milieu d'enregistrement magnétique (2).

2. Un procédé selon la revendication 1, caractérisé en ce que, dans la première étape, ladite couche de tissu non tissé (5a ou 5b) est trempée dans la solution d'huile lubrifiante pour imprégner ladite couche de tissu non tissé par la solution d'huile lubrifiante.

3. Un procédé selon la revendication 1, caractérisé en ce que, dans la première étape, la solution d'huile lubrifiante est pulvérisée sur ladite couche de tissu non tissé (5a ou 5b) pour imprégner ladite couche de tissu non tissé par la solution d'huile lubrifiante.

4. Un procédé selon la revendication 1, caractérisé en ce que, dans la première étape, la solution d'huile lubrifiante est enduite sur ladite couche de tissu non tissé (5a ou 5b) pour imprégner ladite couche de tissu non tissé par la solution d'huile lubrifiante.

5. Un procédé selon la revendication 1, caractérisé en ce que, dans la seconde étape, ladite couche de tissu non tissé (5a ou 5b) qui est imprégnée de la solution d'huile lubrifiante est séchée par un dispositif de séchage.

6. Un procédé selon la revendication 1, caractérisé en ce que, dans la seconde étape, ladite couche de tissu non tissé (5a ou 5b) qui est imprégnée de la solution d'huile lubrifiante est séchée de façon naturelle.

7. Un procédé selon la revendication 1, caractérisé en ce que ledit milieu d'enregistrement magnétique comprend en outre une cassette (7) pour loger ladite feuille de milieu d'enregistrement magnétique et lesdites couches de tissu non tissé (5a, 5b), et en ce que, dans la troisième étape, lesdites couches de tissu non tissé (5a, 5b) obtenues dans la seconde étape sont adhérées aux surfaces internes de ladite cassette (7) pour loger ladite feuille de milieu d'enregistrement magnétique dans ladite cassette.

# F I G. 1

# F I G. 2

```
                    ↓
┌──────────────────────────────────┐
│ DIP NONWOVEN FABRIC IN           │
│ LUBRICATING OIL SOLUTION         │
└──────────────────────────────────┘
                    ↓
┌──────────────────────────────────┐
│        (NATURAL) DRYING          │
└──────────────────────────────────┘
                    ↓
┌──────────────────────────────────┐
│  ASSEMBLE MAGNETIC RECORDING MEDIUM │
│ (ASSEMBLE NONWOVEN FABRIC LAYERS │
│   IN RECORDING MEDIUM)           │
└──────────────────────────────────┘
```

# F I G. 3